# EUROPEAN PATENT SPECIFICATION

(11) **EP 0 288 928 B1**
(45) Date of publication and mention of the grant of the patent: **09.03.1994**
(21) Application number: 88106498.4
(22) Date of filing: 22.04.1988
(51) Int. Cl.: H04N 7/20

(54) **Disposition for satellite direct reception of television programmes**
Aufstellung für Satellitdirektempfang von Fernsehprogrammen
Dispositif pour la réception directe par satellite de programmes de télévision

(30) Priority: 27.04.1987 IT 6735187
(43) Date of publication of application: 02.11.1988
(73) Proprietor: EDICO S.r.l., I-00197 Roma (IT)
(72) Inventor: Dini, Roberto, I-10098 Rivoli (To) (IT); Farina, Attilio, I-66020 Torino (IT)
(74) Representative: Mayer, Hans Benno, Dipl.-Ing.

(56) References cited:
- EP-A- 0 189 012
- WO-A-82/02303
- 13TH INT. TV SYMPOSIUM, Montreux, 28th May - 2nd June 1983, pages 252-255; J.G. CHAPLIN et al.: "European satellite broadcasting. The case for an FM television receiver"

## Description

The present invention refers to a disposition for satellite direct reception of television programmes, comprising an external terminal station, constituted by a parabolic antenna and by a signal converter from 12 GHz downto 1-2 GHz, and an internal unit, which performs the function of amplifier and signal converter, in order to make the signal receivable by a number of normal domestic television receivers; said unit comprising a plurality of converters, each one of them receiving said 1-2 GHz signal and converting it to a channel in the VHF-UHF band.

As known, the Geneva Plan (W.A.R.C. 1977) assigned for direct satellite broadcasting of television programmes for Europe and northern Africa eight orbital satellites, at an angular distance of 6° one from the other (from longitudine +5° est to longitudine -37° west) together covering 39 countries with 5 channels available to each country.

Transmissions shall be effected at frequencies between 11,7 and 12,5 GHz; the total band of 800 MHz (divided in two sub-bands of 400 MHz each) shall comprise 40 television channels, spaced at 19,18 MHz; as the band of each one of the channel will be larger, in order to avoid the overlapping of two adjacent channels, the even channels shall be transmitted with clockwise polarisation and the odd channels with counterclockwise polarisation.

The transmitted signal shall be formed by a carrier frequency modulated by the complete (video and audio) television signal; the coding system has not yet agreed upon; it is likely that for Europe a MAC system will be choosed.

The receiving system for DSTV (Direct Satellite Television) is constituted by two parts: the first one is located outdoor, is called front-end and comprises a parabolic antenna carefully oriented towards the satellite, and a converter from 12 GHz to a lower frequency (e.g. a frequency in the range 950-1750 MHz); the second part is located indoor and performs the function of signal amplifier and processor, in order to make it receivable by a normal domestic TV receiver.

Operations performed by said second part are:
- conversion of the signal to a lower frequency (e. g. 100 MHz);
- signal demodulation;
- if necessary modulation of the signal (according to the local system, e. g. PAL) onto a suitable oscillator (e.g. at the frequency of a normal VHF or UHF television channel).

In the case of a community antenna there are two possible methods:
- distribution of the signal at 1-2 GHz, locating the second part of the receiving system in the single user home;
- arrangement of a suitable number of converters-demodulators-remodulators under the roof and distribution of the obtained signals mixing them with the signals coming from Earth transmitters.

The first method has the drawbacks of requiring a substitution of the complete signal distribution net with a new one, capable of distribute 2 GHz signals, and of requiring that each user buy a complete converting-demodulating unit, and possibly also the remodulator (which is necessary if the television receiver cannot be used as a monitor, i.e. if it does not have the so called SCART socket).

The second method has the drawback that usually a sufficient number of additional free channels is not available.

Let's make an example and consider what will be the situation in Italy.

At least two satellites will be interesting to the italian user:
- the satellite at longitudine 19° west, which shall transmit the italian, swiss, french and austrian channels; swiss, french and austrian channels shall be receivable in northern Italy.
- the satellite at longitudine 37° west, which shall transmit the San Marino, Vatican and Monaco channels; San Marino channels shall be receivable in Centre Italy, Vatican channels in Centre Italy, but one receivable in all Italy, and Monaco channels in northern Italy.

A northern Italy user could therefore receive about 20 possibly interesting channels, the Centre Italy user about 15 and the South Italy user nearly ten, eventually considering also Tunis and Malta.

VHF and UHF free channels are actually only a few, due to the high number of local TV station in operation presently; they are absolutely not enough for a North or Centre Italy user willing to receive DSTV.

For more details about the direct satellite reception of television programmes reference is made to the following articles:
- E. Castelli: Ricezione televisiva diretta da satellite ecc., Elettronica e Telecomunicazioni, N. 3, 1979;
- F. Mussino: Diffusione televisiva diretta da satellite, ibidem, N. 6, 1984;
- G.B. Greborio: Televisione diretta da satellite, ibidem, N. 6, 1984.

It is known from EP-A-0 189 012 a satellite TV system including a plurality of channel strips and a control computer, wherein each channel strip includes a tuner and a modulator matched to each other and are both computer controlled. The tuner selescts the particular satellite signal and the modulator selects the particular channel position on the TV. The document advices that the number of channel strips may be less than than the number of the receivable channels provided that the number of television receivers is less than the number of channels (number of strips equal to number of television receivers).

The object of the present invention is to indicate a disposition for satellite direct reception of television programmes, which avoids the known methods drawbacks and allows, in community antenna installations, the reception of the maximum possible number of satellite channels, in addition to the normal Earth channels, with a minimum cost for the user.

With this aim in view, the subject of the present invention is a disposition for satellite direct reception of television programmes, comprising an external terminal station, constituted by a parabolic antenna and by a signal converter from 12 GHz downto 1-2 GHz, and an internal unit, which performs the function of amplifier and signal converter, in order to make the signal receivable by a number of normal domestic television receivers; said unit comprising a plurality of converters, each one of them receiving said 1-2 GHz signal and converting it to a channel in the VHF-UHF band, characterized in that the number of said converters comprised in said internal unit is less than the number of the channels receivable by said external terminal station and less than the number of the television receivers and that there are provided selection and control means in order to choose the desired channels among the receivable channels and send them to said converters.

The invention is based on the acknowledgement of the fact that in the majority of cases the number of satellite channels actually desired by installation's users is not greater than the number of the free channels in the VHF-UHF bands (of course renouncing to the greater bandwith theoretically available from satellite broadcasting), notwithstanding that the number of the satellite channels teoretically available is greater than said number of free channels.

So for instance, in a city in Centre Italy, where the users of a community antenna installation decide to modify the installation in order to receive also satellite channels, installing two external terminals, one for the italian satellite and the other for the San marino-Vatican satellite, the channels teoretically receivable with both terminals will be 80; the channels actually receivable will be 15 (5 italian, 5 from San Marino and 5 from Vatican); the channels contemporaneously desired italiani + 5 sanmarinesi + 5 vaticani); those really desired in a given moment by all users shall probably be not more than 7-8.

Therefore, in the great majority of cases eight channels will be enough to satisfy all requests, and consequently, as will be apparent from the description of the example which follows, it shall neither be necessary to substitute the distribution cables, nor for any user to buy a complete internal unit, because the signal distribution may be effected in the VHF band, where eight free channels are always available, owing to the fact that in Italy RAI utilizes, for the broadcasting of the so called first programme (or national programme), only one VHF channel in each location.

Further objects and advantages of the present invention will be clear from the detailed description which follows and from the attached drawings, given only as a mere explanatory and not limiting example, where:

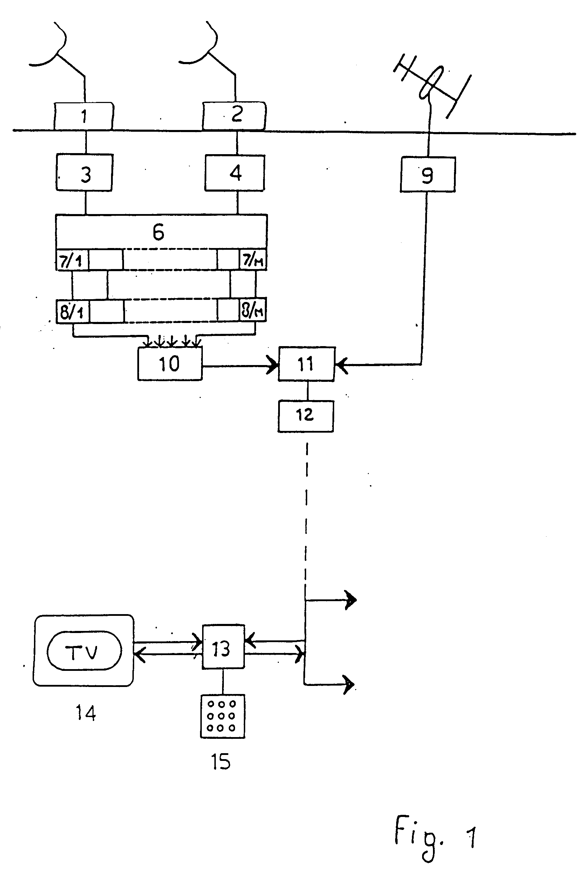

- in figure 1 there is shown the schematic block diagram of a disposition for satellite or Earth stations direct reception of television programmes, according to the invention.

Referring to figure 1, which shows the schematic block diagram of a disposition for satellite or Earth stations direct reception of television programmes, according to the invention, with the reference numeral 1 there is indicated a terminal external station, comprising a parabolic antenna directed towards a first television satellite (for instance the european satellite at longitude -19° west, transmitting Austria, Belgium, France, Germany, Italy, Luxembourg, Nederland, Switzerland programmes) and a signal converter from the satellite frequency (11,7-12,5 GHz) to a first intermediate frequency (950-1750 MHz); the antenna of said terminal station shall be orientated, e. g. in the Turin area, with an elevation of about 32° and an azimut of about -35°; in the same figure with the reference numeral 2 there is indicated a second external terminal station, equal to the first one, but having the antenna directed towards a second television satellite (for instance the european satellite at longitude -37° west, which transmits the Andorra, Liechtenstein, Monaco, San Marino, and Vatican programmes).

With reference numeral 3 there is indicated an amplifier, amplifying the signal coming out from the converter 1, and having the frequency of said first intermediate frequency (950-1750 MHz); with the reference numeral 4 there is indicated an equal amplifier which amplifies the signal coming out from converter 2; signals coming out from unit 3 comprise 40 television channels, and so the signals coming out from unit 4; all these signals are available to unit 6.

With reference numeral 6 there is indicated a controller-selector-demodulator assembly which comprises a control unit and a number M (e. g. 8) of parallel units (7/1...7/M), each one comprising a tuner (preferably of the frequency synthesis type) controlled by the said controller, a amplifier-converter and a signal demodulator; downstream of the M units an equal number of coder-modulators (8/1...8/M) are connected; they recode, according to the PAL system, video and audio signals obtained from demodulation, and remodulate accordingly an equal number of suitable carriers, located in VHF or UHF band.

Amplifiers 3 and 4 and the assembly 6 are preferably located underneath the house roof.

The M signals so obtained are mixed in a mixer 10 and sent to a second mixer 11, which also receives the signals coming from Earth stations, received through antennas shown at 5 and amplified at 9.

Signals coming out from mixer 11 are sent through a first control unit 12, which function will be explained later, and arrive, via the normal VHF-UHF signal distribution network, to the users.

One of the user is shown at 14; the television receiver (TV) is a normal PAL receiver with VHF-UHF channels capability; with reference numeral 13 there is indicated a second control unit, with a command unit 15, whose function also will be explained later.

As known, in Italy the UHF band is completely occupied by public and private television stations, but the VHF band is reserved to RAI to broadcast first programme (national programme). Only in a few locations two RAI stations transmitting first programme are receivable (e.g. near Milan both the Milan transmitter and the Monte Penice transmitter are receivable), but generally in all the italian territory only one of the available VHF channels is occupied. The italian TV receivers are equipped with 10 VHF channels, so that 8 or 9 channels are available for satellite signal distribution.

For instance in the Turin area (excluding to be safe beside channel C also channel B of Monte Penice) channels A,D,E,F,G,H,H1,H2 are free.

On such channels the oscillators of modulators 8/1...8/M may be safely tuned.

Let's now see in detail, referring to a practical example, the operation of the shown disposition.

Let's assume that the user is living in Turin and desires to receive the signal of the channel 1 of the satellite toward which the antenna of the external unit 1 is directed; said channel uses the frequency of 11,72748 GHz, with clockwise polarisation, and transmits a french programme. The user shall digit on the command unit 15, equipped with numbered keys, the number 101 (channel 1 of satellite 1); if the user desires instead the channel 25 of satellite 2 (Monaco channel), he shall digit the number 225.

Controller 13, equipped with a signal generator, e.g. at 460 MHZ, sends the request of channel 101, suitably coded, on the connected signals distribution cable; the request is received, decoded and sorted by control unit 12 and arrives to the main controller 6.

Controller 6, after reception of the request, checks in its memory the situation of the M tuners 7 and of the M modulators 8; if no one of the tuners is receiving the 101 channel and if at least a VHF channel is free(i.e. if there is at least a modulator 8 is idle), controller 6 effects the following:
- tunes the tuner corresponding to the free channel (let's assume the tuner 7/8) on channel 101;
- connects input of tuner 7/8 to the output of unit 3;
- activates the corresponding modulator 8/8, which starts to transmit on channel H2 the PAL signal obtained from the signal coming from satellite via the external unit 1.

The signal on the H2 channel comprises, suitably coded, two additional informations (e.g. inserted in a free line during vertical flyback), i.e.: the desired channel number (101) and the conversion channel number (H2).

Control unit 13 is equipped with a tuner which sweeps all the 8 VHF channels available to satellite signals, witha decoder and with a small alphanumeric display; unit 13, therefore, can acknowledge that 101 channel has been inserted on channel H2 and show the fact to the user.

The user can therefore tune on the channel H2 and receive the desired French programme.

Of course the technician who instals the disposition shall adjust controller 6 on the basis of the VHF channels which are free in the location where the disposition has been installed.

The described system allows to utilize at the same time only 8 satellite programmes in the same instalment; it is likely that in the majority of the cases the channels desired by the users of the community antenna are not more; it is well known that the users are always inclined to select the same programmes; if, notwithstanding, a greater number of satellite programmes is contemporaneously desired, the television receiver may be equipped with an additional tuner, capable of receiving e.g. the VHF channels in the 118-174 MHZ band, or in the 230-300 MHz band; such tuners are currently available to receive the so called CATV programmes.

Of course the number of tuners 7 and of modulators 8 should, in that case, be increased to 16-17 or more.

Control units 6, 12 and 13 should conveniently be of the microprocessor controlled type, in order to be easily reprogrammed, if necessary.

Controller 13, and corresponding command unit 15, may be integrated into the television receiver, so that the user may use the receiver remote control facility in order to select also the satellite channels; in this case the tuning of the channel onto which the satellite signal is converted by unit 6 may be immediate, because all the process can be directly managed by the television receiver microprocessor. Of course to get such a higher convenience, the user will be obliged to change the old television receiver with a new one, comprising the controller 13 according to the present invention.

In the case that the control unit 13 is integrated in the television receiver (TV), messages to the user may be conveniently displayed onto the picture tube screen, using a well known technique (see for instance the italian patent N. 1.108.164).

In order to avoid that control unit 6 considers as occupied channels no more interesting to a user, it is convenient that control unit 13 is prepared to send to unit 6 an end of reception signal when the television receiver is turned off, or, in the case that it is integrated into the receiver, a suitable time interval after the user has switched to a different channel.

In order to avoid interferences between the different users signals, units 13 may be suitably tuned, at the instalment time, on slightly different frequencies.

As an alternative, units 13 may be prepared to transmit the messages as pulses, as already known for remote controls (see e.g. integrated circuits M709/A and M104 of S.G.S. firm), with a very short duty cycle (e. g. a command lasts for one millisecond and is repeated every 100 milliseconds); in such a way the probability that the pulses coming from two different units 13 will overlap is practically negligible.

In a further alternative units 13 are prepared to store the messages to be transmitted to upper unit 6 and to transmit them staggered in time (e.g. if units 13 are 20, they may be enabled to transmit at 10 milliseconds time intervals one from the other; maximum time delay will be in that case of only 200 milliseconds).

The operation of the described disposition is clear from the description made and from the attached drawings.

Form the description made are also clear the advantages of the disposition subject of the present invention.

In particular they are represented by the fact that it is possible to receive satellite programmes without substituting the existing signal distribution network with a new one, suitable to a 2 MHz frequency, substitution which will represent a substantial cost and that, often, will involve difficult practical problems (as broken walls, etc); moreover the disposition according to the invention allows the use of existing television receivers, without modifications, with only the addition of the control unit 13, or, in a few cases, of an additional CATV tuner.

It is clear that many variations of the described disposition, in addition to the already cited, are possible to the man of the art, witout departing from the scope and the novelty principles of the present invention.

Among the many possible variations e.g. the coder-modulator, instead of recoding the television signalaccording to PAL system, may recode it according to a different system (e. g. NTSC, SECAM) used in the country where the disposition is installed.

## Claims

1. Disposition for satellite direct reception of television programmes, comprising an external terminal station, constituted by a parabolic antenna and by a signal converter from 12 GHz down to 1-2 GHz, and an internal unit, which performs the function of amplifier and signal converter, in order to make the signal receivable by a number of normal domestic television receivers; said internal unit comprising a plurality of converters, each one of them receiving said 1-2 GHz signal and converting it to a channel in the VHF-UHF band, characterized in that the number (M) of said converters (7/1...7/M, 8/1...8/M) comprised in said internal unit is less than the number of the channels receivable by said external terminal station and less than the number of the television receivers and that there are provided selection and control means (6, 12, 13) in order to choose the desired channels among the receivable channels and send them to said converters.

2. Disposition for satellite direct reception of television programmes, according to claim 1, characterized in that each one of said converters comprises a tuner-demodulator (7/1...7/M) in order to tune and demodulate the signal of one of the satellite channels receivable through said external terminal station (1; 2), and a coder -modulator (8/1...8/M) in order to recode according to PAL system the demodulated signal and modulate it on a channel in the VHF-UHF band.

3. Disposition for satellite direct reception of television programmes, according to claim 1 or 2, characterized in that said channel in the VHF-UHF band is a VHF channel free from signals of Earth stations in the location where the disposition is located.

4. Disposition for satellite direct reception of television programmes, according to claim 3, characterized in that said number M of VHF channels is a number comprised between 8 and 9 and that said VHF channel is one of Italian channels from A to H2.

5. Disposition for satellite direct reception of television programmes, according to claim 3, characterized in that said channel in the VHF-UHF is a VHF channel comprised between 118 and 174 MHz or between 230 and 300 MHz.

6. Disposition for satellite direct reception of television programmes, according to claim 1, characterized in that said selection and control means in order to choose the desired channels among the receivable channels and send them to said converters (7/1...7/M, 8/1...8/M) comprise a first control unit (6) located near to said converters, a second control unit (12) located at the head of the signal distribution network, and a third control unit (13), located near the user outlet of the distributed signals.

7. Disposition for satellite direct reception of television programmes, according to claim 2 and 6, characterized in that said first control unit (6) is equipped with means in order to tune one of the tuners (7/1...7/M) on the requested satellite channel, connect the input of tuner (7/1...7/M) to the output of the corresponding external terminal station (1, 2) and activate the relevant modulator (8/1...8/M).

8. Disposition for satellite direct reception of television programmes, according to claim 7, characterized in that said fist control unit (6) is equipped with means in order to memorize the situation of the M tuners-demodulators (7/1...7/M) and that of the M coders-modulators (8/1...8/M) in order to know which are the tuned satellite channels and which are the idle modulators.

9. Disposition for satellite direct reception of television programmes, according to claim 6, characterized in that said third control unit (13) comprises a command unit (15) in order to receive from the user commands containing the indication of the desired satellite channel, and comprises means in order to code said commands and send them via the distribution network to said second control unit (12).

10. Disposition for satellite direct reception of television programmes, according to claim 9, characterized in that said second control unit (12) comprises means to decode said coded commands received from said third control unit (13) and send them to said first control unit (6).

11. Disposition for satellite direct reception of television programmes, according to claim 9, characterized in that said first control unit (6) comprises means in order to insert into the television signal converted by said converter (7/1...7/M, 8/1...8/M) informations relating to the original number of the satellite channel and to the number of the VHF channel onto which it has been converted.

12. Disposition for satellite direct reception of television programmes, according to claim 11, characterized in that said third control unit (13) comprises tuning means in order to tune and demodulate the signals received from the distribution network and display means in order to display said information to the user.

13. Disposition for satellite direct reception of television programmes, according to claim 6, characterized in that said first (6), second (12) and third (13) control units are microprocessor controlled.

14. Disposition for satellite direct reception of television programmes, according to claim 9, characterized in that said third control unit (13) is integrated into the television receiver (TV), and said command unit (15) is integrated in the remote control device of the television receiver itself.

15. Disposition for satellite direct reception of television programmes, according to claim 14, characterized in that said third control unit (13) provides for sending to said first control unit (6) an "end of reception" signal a predetermined time interval after that the user has finished to tune the requested satellite channel.

16. Disposition for satellite direct reception of television programmes, according to claim 9, characterized in that said third control unit (13) provides for sending to said first control unit (6) an "end of reception" signal a predetermined time interval after that the television receiver (TV) has been turned off.

17. Disposition for satellite direct reception of television programmes, according to claims 12 and 14, characterized in that said diplay means are represented by the screen of the television receiver (TV).

18. Disposition for satellite direct reception of television programmes, according to claim 9, characterized in that said commands are sent out by said third control unit (13), via the distribution network, towards said second control unit (12), using a carrier at the frequency of about 460 MHz.

19. Disposition for satellite direct reception of television programmes, according to claim 9, characterized in that said commands are sent out by said third control unit (13), via the distribution network, towards said second control unit (12), at predetermined time intervals, the duration of the message being much shorter than the time interval between two messages.

20. Disposition for satellite direct reception of television programmes, according to claim 9, characterized in that said commands are sent out by said third control unit (13), via the distribution network, towards said second control unit (12), at predetermined time moments, which are different for each one of the said control unit (13).

## Patentansprüche

1. Aufstellung fuer Satellitdirektempfang von Fernsehprogrammen, umfassend eine aus einer Parabolantenne und einem Signalumsetzer von 12 GHz herab auf 1-2 GHz bestehende aeussere Endstation, und eine innere Einheit, die die Funktion eines Verstaerkers sowie eines Signalumsetzers ausuebt, so dass das Signal von einer Anzahl von ueblichen Hausfernsehempfaengern empfangbar wird, wobei die genannte innere Einheit eine Anzahl von Umsetzern umfasst, wobei jeder Umsetzer das genannte 1-2 GHz-Signal empfaengt und dasselbe in einen Kanal im VHF-UHF-Band umsetzt, **dadurch gekennzeichnet**, dass die Anzahl (M) der genannten in der inneren Einheit enthaltenen Umsetzer (7/1 ...7/M, 8/1 ...8/M) niedriger als die Anzahl der von der genannten aeusseren Endstation empfangbaren Kanaele und niedriger als die Anzahl der Fernsehempfaenger ist, und dass Wähl- und Steuermittel (6, 12, 13) vorgesehen sind, um von den empfangbaren Kanaelen die gewuenschten Kanaele zu waehlen, und die letzteren zu den genannten Umsetzern zu senden.

2. Aufstellung fuer Satellitdirektempfang von Fernsehprogrammen nach Anspruch 1, **dadurch gekennzeichnet**, dass jeder der genannten Umsetzer einen Abstimmer-Demodulator (7/1...7/M), um das Signal von einem der durch die genannnte aeussere Endstation (1; 2) empfangbaren Satellitkanaele abzustimmen und zu demodulieren, und einen Coder-Modulator (8/1...8/M) umfasst, um das demodulierte Signal nach dem PAL-System umzucodieren und dasselbe in einen Kanal im VHF-UHF-Band zu modulieren.

3. Aufstellung fuer Satellitdirektempfang von Fernsehprogrammen nach Anspruch 1 oder 2**, dadurch gekennzeichnet**, dass der genannte Kanal im VHF-UHF-Band ein VHF-Kanal ist, der von Signalen von lokalen Erdstationen, in deren Naehe die Aufstellung angeordnet ist, befreit ist.

4. Aufstellung fuer Satellitdirektempfang von Fernsehprogrammen nach Patentanspruch 3, **dadurch gekennzeichnet**, dass die genannte Anzahl M von VHF-Kanaelen eine zwischen 8 und 9 liegende Zahl ist, und dass der genannte VHF-Kanal einer der italienischen Kanaele von A bis H2 ist.

5. Aufstellung fuer Satellitdirektempfang von Fernsehprogrammen nach Anspruch 3, **dadurch gekennzeichnet**, dass der genannte Kanal im VHF-UHF-Band ein VHF-Kanal ist, der zwischen 118 und 174 Mhz oder zwischen 230 und 300 MHz enthalten ist.

6. Aufstellung fuer Satellitdirektempfang von Fernsehprogrammen nach Anspruch 1, **dadurch gekennzeichnet**, dass die genannten Wähl- und Steuermittel, um die von den empfangbaren Kanaelen gewuenschten Kanaele zu waehlen und dieselben zu den genannten Umsetzern (7/1...7/M, 8/1...8/M) zu senden, eine in der Naehe der genannten Umsetzer angeordnete erste Steuereinheit (6), eine am Kopf des Signaluebertragungsnetzes angeordnete zweite Steuereinheit (12) und eine in der Naehe des Verbraucherausganges der uebertragenen Signale angeordnete dritte Steuereinheit (13) umfassen.

7. Aufstellung fuer Satellitdirektempfang von Fernsehprogrammen nach Anspruch 2 und 6, **dadurch gekennzeichnet**, dass die genannte erste Steuereinheit (6) mit Mitteln versehen ist, um einen der Abstimmer (7/1...7/M) auf den gewuenschten Satellitkanal abzustimmen, den Eingang von Abstimmern (7/1...7/M) mit dem Ausgang der entsprechenden aeusseren Endstation (1, 2) zu verbinden, und den anwendbaren Modulator (8/1...8/M) zu aktivieren.

8. Aufstellung fuer Satellitdirektempfang von Fernsehprogrammen nach Anspruch 7, **dadurch gekennzeichnet**, dass die genannte erste Steuereinheit (6) mit Mitteln versehen ist, um den Zustand der M Abstimmer-Demodulatoren (7/1...7/M) und den Zustand der M Coder-Modulatoren (8/1...8/M) zu speichern, um festzustellen, welche die abgestimmten Satellitkanaele und welche die leerlaufenden Modulatoren sind.

9. Aufstellung fuer Satellitdirektempfang von Fernsehprogrammen nach Anspruch 6, **dadurch gekennzeichnet**, dass die genannte dritte Steuereinheit (13) eine Steuereinheit (15) umfasst, um vom Benutzer Befehle zu empfangen, die die Angabe des gewuenschten Satellitkanals enthalten, und ferner Mittel umfasst, um die genannten Befehle zu codieren und dieselben zu der genannten zweiten Steuereinheit (12) ueber das Uebertragungsnetz zu senden.

10. Aufstellung fuer Satellitdirektempfang von Fernsehprogrammen nach Anspruch 9, **dadurch gekennzeichnet**, dass die genannte zweite Steuereinheit (12) Mittel zur Decodierung der von der genannten dritten Steuereinheit (13) empfangenen genannnten codierten Befehle und zum Senden derselben zu der genannten ersten Steuereinheit (6) umfasst.

11. Aufstellung fuer Satellitdirektempfang von Fernsehprogrammen nach Anspruch 9, **dadurch gekennzeichnet**, dass die genannte erste Steuereinheit (6) Mittel enthaelt, um in das durch den genannten Umsetzer (7/1...7/M, 8/1...8/M) umgesetzte Fernsehsignal Informationen einzufuegen, die die uerspruengliche Zahl des Satellit-Kanals sowie die Zahl des VHF-Kanals, in welchen der erste umgesetzt wurde, betreffen.

12. Aufstellung fuer Satellitdirektempfang von Fernsehprogrammen nach Anspruch 11, **dadurch gekennzeichnet**, dass die genannte dritte Steuereinheit (13) Abstimmungsmittel, um die vom Uebertragungsnetz empfangenen Signale abzustimmen und zu demodulieren, sowie Anzeigemittel zum Anzeigen der genannten Information an den Benutzer umfasst.

13. Aufstellung fuer Satellitdirektempfang von Fernsehprogrammen nach Anspruch 6, **dadurch gekennzeichnet**, dass die gennanten erste (6), zweite (12) und dritte (13) Steuereinheiten durch Mikroprozessoren gesteuert sind.

14. Aufstellung fuer Satellitdirektempfang von Fernsehprogrammen nach Anspruch 9, **dadurch gekennzeichnet**, dass die genannte dritte Steuereinheit (13) in einem Fernsehempfaenger (TV) integriert ist, und die genannte Steuereinheit (15) in dem entfernt angeordneten Steuergeraet des Fernsehempfaengers selbst integriert ist.

15. Aufstellung fuer Satellitdirektempfang von Fernsehprogrammen nach Anspruch 14, **dadurch gekennzeichnet**, dass die genannte dritte Steuereinheit (13) dafuer sorgt, dass zu der genannten ersten Steuereinheit (6) ein "Empfangsende"-Signal in einem vorbestimmten Zeitabstand, nachdem der Benutzer das Abstimmen des gewuenschten Satellitkanals beendet hat, uebertragen wird.

16. Aufstellung fuer Satellitdirektempfang von Fernsehprogrammen nach Anspruch 9, **dadurch gekennzeichnet**, dass die genannte dritte Steuereinheit (13) dafuer sorgt, dass zu der genannten ersten Steuereinheit (6) ein "Empfangsende"-Signal in einem vorbestimmten Zeitabstand, nachdem der Fernsehempfaenger (TV) abgeschaltet wurde, uebertragen wird.

17. Aufstellung fuer Satellitdirektempfang von Fernsehprogrammen nach Anspruch 12 und 14, **dadurch gekennzeichnet**, dass die gennanten Anzeigemittel durch den Bildschirm des Fernsehempfaengers (TV) dargestellt sind.

18. Aufstellung fuer Satellitdirektempfang von Fernsehprogrammen nach Anspruch 9, **dadurch gekennzeichnet**, dass die genannten Befehle durch die genannte dritte Steuereinheit (13) ueber das Uebertragungsnetz zur genannten zweiten Steuereinheit (12) hin unter Verwendung eines Traegers mit einer Frequenz von ca. 460 MHz. ausgesandt werden.

19. Aufstellung fuer Satellitdirektempfang von Fernsehprogrammen nach Anspruch 9, **dadurch gekennzeichnet**, dass die genannten Befehle durch die genannte dritte Steuereinheit (13) ueber das Uebertragungsnetz zur genannten zweiten Steuereinheit (12) hin in vorbestimmten Zeitabstaenden ausgesandt werden, wobei die Meldungsdauer viel kuerzer als der Zeitabstand zwischen zwei Meldungen ist.

20. Aufstellung fuer Satellitdirektempfang von Fernsehprogrammen nach Anspruch 9, **dadurch gekennzeichnet**, dass die genannten Befehle durch die genannte dritte Steuereinheit (13) ueber das Uebertragungsnetz zur zweiten Steuereinheit (12) hin an vorbestimmten Zeitpunkten, die fuer jede der genannten Steuereinheiten (13) verschieden sind, ausgesandt werden.

## Revendications

1. Installation pour la réception directe par satellite de programmes de télévision, comprenant une station terminale extérieure formée par une antenne parabolique et par un convertisseur de signaux de 12 GHz à 1-2 GHz, et une unité interne, qui accomplit la fonction d'un amplificateur et d'un convertisseur de signaux, pour faire en sorte que le signal puisse être reçu par un nombre de récepteurs de télévision "grand public" normaux; ladite unité interne comprenant une pluralité de convertisseurs dont chacun reçoit ledit signal de 1-2 GHz et le convertit en un canal dans la bande VHF-UHF, caractérisé en ce que le nombre (M) desdits convertisseurs (7/1...7/M, 8/1...8/M) inclus dans ladite unité, interne est inférieur au nombre de canaux pouvant être reçus par ladite station terminale extérieure et inférieur au nombre de récepteurs de télévision et en ce qu'il y a des moyens de sélection et de commande (6, 12, 13) pour choisir les canaux souhaités parmi les canaux pouvant être reçus et les transmettre auxdits convertisseurs.

2. Installation pour la réception directe par satellite, de programmes de télévision, selon la revendication 1, caractérisée en ce que chacun des convertisseurs précités comprend un syntoniseur-démodulateur (7/1...7/M) pour syntoniser et démoduler le signal de l'un des canaux de satellite pouvant être reçus par l'intermédiaire de la station terminale externe (1, 2), et un codeur-modulateur (8/1...8/M), pour recoder selon le système PAL le signal démodulé et moduler celui-ci sur un canal dans la bande VHF-UHF.

3. Installation pour la réception directe par satellite de programmes de télévision, selon la revendication 1 ou 2, caractérisée en ce que ledit canal dans la bande VHF-UHF est un canal VHF exempt de signaux de stations de terre au lieu où l'installation est située.

4. Installation pour la réception directe par satellite de programmes de télévision, selon la revendication 3, caractérisée en ce que le nombre M précité de canal VHF est un nombre compris entre 3 et 9 et en ce que ledit canal VHF est l'un des canaux italiens de A à H2.

5. Installation pour la réception directe par satellite de programmes de télévision, selon la revendication 3, caractérisée en ce que ledit canal dans la bande VHF-UHF est un canal VHF compris entre 118 et 174 MHz ou entre 230 et 300 MHz.

6. Installation pour la réception directe par satellite de programmes de télévision, selon la revendication 1, caractérisée en ce que les moyens de sélection et de commande précités, pour choisir les canaux souhaités parmi les canaux pouvant être reçus et les envoyer aux convertisseurs précités (7/1...7/M, 8/1...8/M) comprennent une première unité de commande (6) située près desdits convertisseurs, une seconde unité de commande (12) située à la tête du réseau de distribution de signaux, et une troisième unité de commande (13) située près de la sortie d'utilisateur des signaux distribués.

7. Installation pour la réception directe par satellite de programmes de télévision, selon l'une des revendications 2 et 6, caractérisée en ce que la première unité de commande précitée (6) est équipée de moyens pour syntoniser l'un des syntoniseurs (7/1...7/M) sur le canal de satellite demandé, connecter l'entrée du syntoniseur (7/1...7/M) à la sortie de la station terminale extérieure correspondante (1, 2) et pour activer le modulateur concerné (8/1...8/M).

8. Installation pour la réception directe par satellite de programmes de télévision, selon la revendication 7, caractérisée en ce que ladite première unité de commande (6) est équipée de moyens pour mémoriser la situation des M syntoniseurs-démodulateurs (7/1...7/M) et celle des M codeurs-modulateurs (8/1...8/M) pour savoir quels sont les canaux de satellite syntonisés et quels sont les modulateurs libres.

9. Installation pour la réception directe par satellite de programmes de télévision, selon la revendication 6, caractérisée en ce que la troisième unité de commande précitée (13) comprend une unité de commande (15) pour recevoir de l'utilisateur des ordres contenant l'indication du canal de satellite souhaité, et comprend des moyens pour coder lesdites commandes et les transmettre par le réseau de distribution à la seconde unité de commande (12).

10. Installation pour la réception directe par satellite de programmes de télévision, selon la revendication 9, caractérisée en ce que la seconde unité de commande (12) comprend des moyens pour décoder les ordres ou commandes codés reçus de la troisième unité de commande (13) précitée et les envoyer à la première unité de commande précitée (6).

11. Installation pour la réception directe par satellite de programmes de télévision, selon la revendication 9, caractérisée en ce que la première unité de commande précitée (6) comprend des moyens pour insérer dans le signal de télévision converti par ledit convertisseur (7/1...7/M, 8/1...8/M) les informations concernant le numéro initial du canal de satellite et le numéro du canal VHF sur lequel elle a été convertie.

12. Installation pour la réception directe par satellite de programmes de télévision, selon la revendication 11, caractérisée en ce que la troisième unité de commande précitée (13) comprend des moyens syntoniseurs pour syntoniser et démoduler les signaux reçus du réseau de distribution et des moyens de reproduction pour reproduire ladite information pour l'utilisateur.

13. Installation pour la réception directe par satellite de programmes de télévision, selon la revendication 6, caractérisée en ce que les première (6), seconde (12) et troisième (13) unités de commande sont des microprocesseurs commandés.

14. Disposition pour la réception directe par satellite de programmes de télévision, selon la revendication 9, caractérisée en ce que la troisième unité de commande précitée (13) est intégrée au récepteur de télévision (TV), et que l'unité de commande précitée (15) est intégrée au dispositif de commande à distance du récepteur de télévision lui-même.

15. Installation pour la réception directe par satellite de programmes de télévision, selon la revendication 14, caractérisée en ce que la troisième unité de commande précitée (13) est adaptée pour envoyer à la première unité de commande (6) un signal de "fin de réception", dans un intervalle de temps prédéterminé après que l'utilisateur ait fini de syntoniser le canal de satellite demandé.

16. Installation pour la réception directe par satellite de programmes de télévision, selon la revendication 9, caractérisée en ce que la troisième unité de commande (13) est adaptée pour transmettre à la première unité de commande (6) un signal de "fin de réception", dans un intervalle de temps prédéterminé après que le récepteur de télévision (TV) ait été arrêté.

17. Installation pour la réception directe par satellite de programmes de télévision, selon les revendications 12 et 14, caractérisée en ce les moyens de reproduction sont formés par l'écran du récepteur de télévision (TV).

18. Installation pour la réception directe par satellite de programmes de télévision, selon la revendication 9, caractérisée en ce que lesdits ordres sont émis par la troisième unité de commande (13), à travers le réseau de distribution, vers la seconde unité de commande (12), en utilisant une porteuse d'une fréquence d'environ 460 MHz.

19. Installation pour la réception directe par satellite de programmes de télévision, selon la revendication 9, caractérisée en ce que lesdits commandes ou ordres sont émis par la troisième unité de commande (13), à travers le réseau de distribution, vers la seconde unité de commande (12), à des intervalles de temps prédéterminés, la durée du message étant inférieure à celle de l'intervalle de temps entre deux messages.

20. Installation pour la réception directe par satellite de programmes de télévision, selon la revendication 9, caractérisée en ce que lesdits commandes ou ordres sont émis par la troisième unité de commande (13), par l'intermédiaire du réseau de distribution, vers la seconde unité de commande (12), à des moments de temps prédéterminés, qui sont différents pour chacune des unités de commande (13).
